# EUROPÄISCHE PATENTSCHRIFT

(11) **EP 2 762 104 B1**
(45) Veröffentlichungstag und Bekanntmachung des Hinweises auf die Patenterteilung: **06.12.2017**
(21) Anmeldenummer: 13153477.8
(22) Anmeldetag: 31.01.2013
(51) Int. Cl.: A61C 8/00

(54) **Abformpfosten**
Impression post
Pilier de transfer

(43) Veröffentlichungstag der Anmeldung: 06.08.2014
(73) Patentinhaber: SIC Invent AG, 4055 Basel (CH)
(72) Erfinder: von Malottki, Marcus, 40699 Erkrath (DE)
(74) Vertreter: Kugler, Jörg

(56) Entgegenhaltungen:
- EP-A1- 2 005 915
- EP-A1- 2 570 097
- US-A- 5 782 918
- US-A1- 2012 237 899

## Beschreibung

Die Erfindung betrifft einen Einbringpfosten nach Anspruch 1. Sie umfasst weiterhin einen Abformpfosten.

Für Patienten, die einen oder mehrere Zähne verloren haben, gibt es heutzutage mehrere Möglichkeiten, die ehemals vorhandenen eigenen Zähne durch Zahnersatz bzw. künstliche Zähne zu ersetzen. Neben Brücken, bei denen der Zahnersatz beispielsweise zwischen noch vorhandenen Zähnen befestigt wird, eignen sich insbesondere Implantate für eine vollwertige Versorgung. Das Implantat wird an der Position des fehlenden Zahns in den Kiefer des Patienten geschraubt und nimmt durch ein in das Implantat eingesetztes Abutment den künstlichen Zahn in Form einer Krone auf. Die künstliche Zahnversorgung geschieht in den meisten Fällen nicht nur aufgrund ästhetischer Gesichtspunkte. Auch medizinische Kriterien sind oft relevant. Bei fehlenden Zähnen kann sich nämlich der Kiefer verschieben bzw. verkleinern, und Knochen kann sich bei fehlender Versorgung im Laufe der Zeit abbauen. Zudem können Zähne im gegenüberliegenden Kiefer, die keinen Gegenpart mehr haben, aus dem Kiefer heraustreten, was zu weiterem Zahnverlust führen kann.

Um den Zahnersatz, d. h. gewöhnlich die Krone, zu modellieren, wird gewöhnlich die Zahn- bzw. Mundsituation des Patienten auf ein Meistermodell übertragen. Die Mundsituation umfasst dabei die Konturen der noch vorhandenen Zähne sowie jeweils die Position bzw. Lage und Orientierung der im Knochen befestigten Implantate. Die Orientierung erfolgt dabei durch eine Indizierung, die gewöhnlich im Implantat durch eine rotationsgesicherte Schnittstelle, häufig als Innensechskant, realisiert wird. Das Abutment umfasst wiederum ein Einbringstück, welches mit dem Implantat eine rotationssichere Verbindung ermöglicht. Bei Anfertigung des Abutments und der Krone kann auf diese Weise gewährleistet werden, dass bei Einsatz der Krone diese richtig orientiert ist und sich wie in dem Modell geplant in die noch vorhandene Zahnsituation des Patienten einfügt.

Zur Übertragung der Lage und Orientierung der Implantate sind die geschlossene und die offene Löffeltechnik bekannt, bei denen die Mundsituation mit Hilfe einer Abformmasse und in das jeweilige Implantat eingesetzte Abformpfosten auf das Modell übertragen wird. Ein Abformpfosten für die offene Löffeltechnik weist dabei gewöhnlich einen Einbringpfosten und ein als Schraube ausgeführtes Befestigungselement zur Befestigung des Einbringpfostens am Implantat auf. Bei der offenen Löffeltechnik verbleiben die Einbringpfosten bei Entfernung des Abformlöffels aus dem Mund in der Abformmasse. Dazu werden vor der Entnahme die Befestigungselemente gelöst. Um dies zu ermöglichen, sind in dem Abformlöffel Löcher vorgesehen, durch die die Befestigungselemente zum Lösen der Einbringpfosten von den Implantaten geführt werden können. Ein Abformpfosten bzw. zahntechnischer Übertragungsaufbau, der sich für die offene Löffeltechnik eignet, ist beispielsweise in der DE 296 20 299 U1 offenbart.

Die Abformung erweist sich besonders dann als schwierig, wenn gleichzeitig mehrere stark angulierte bzw. jeweils paarweise zueinander windschiefe, nicht parallele Implantate abgeformt werden sollen. Durch den zwangsläufigen Hinterschnitt der Verbindung zum Implantat ergibt sich durch die Zähigkeit der Abformmasse eine Art Verblockung der Implantate untereinander. Eine Gruppe verblockter Implantate kann nur gegen den - im Wesentlichen - elastischen Widerstand der Abformmasse abgeformt werden. Das heißt, während des Lösens der Abformmasse aus dem Mund muss die Abformmasse stellenweise verformt werden. In der Praxis verhalten sich Abformmassen allerdings nicht vollständig elastisch, so dass eine vollständig reversible Reaktion auf die Auslenkungen nicht erfolgt. Dies resultiert in einer mitunter starken Rückstellungenauigkeit der Abdruckmasse, in Folge dessen sich Ungenauigkeiten bei der Abformung ergeben können. Der Widerstand der Abformmasse und der Hinterschnitt der Verbindungen zu den einzelnen Implantaten kann auch für den Patienten sehr unangenehm sein, da sich der Abformlöffel nur mit erheblichen Kraftaufwand von dem Kiefer lösen lässt.

Der Erfindung liegt die Aufgabe zugrunde, einen Einbringpfosten bereitzustellen, welcher bei offener Löffeltechnik beim gleichzeitigen Abformen mehrerer stark angulierter bzw. zueinander schief stehender Implantate eine präzise Übertragung von Lage und Orientierung der Implantate ermöglicht und einen einfachen Aufbau aufweist. Weiterhin soll ein geeigneter Abformpfosten angegeben werden.

In Bezug auf den Einbringpfosten wird diese Aufgabe erfindungsgemäß dadurch gelöst, dass sich an das Einbringstück ein Endstück anschließt, welches sich im Wesentlichen unter Beibehaltung der Außenkontur zum apikalen Ende des Implantats hin im Querschnitt verjüngt.

Vorteilhafte Ausgestaltungen sind Gegenstand der Unteransprüche.

Die Erfindung geht von der Überlegung aus, dass bei der Durchführung einer Abformung die Bestimmung der Orientierungen und Lagen der Implantate so genau wie möglich erfolgen sollte, da im Nachhinein Fehler des Abutments, die auf unpräzise übermittelten Informationen beruhen, schwer bis gar nicht korrigiert werden können. Fehler, die zu einer falschen Bestimmung von Lage und Orientierung des Implantats führen, können dabei einerseits beim Einsetzen des Einbringpfostens in das Implantat geschehen, wenn beispielsweise beim Anziehen der Schraube, mit der der Einbringpfosten am Implantat festgeschraubt wird, Mundschleimhaut bzw. Zahnfleisch eingeklemmt wird und beim Festziehen keine definierte Indizierung vorliegt, oder auch durch gegenseitiges Verkanten von Implantat und Einbringpfosten. Andererseits können sie beim Abziehen der Abformmasse geschehen.

Bei der offenen Löffeltechnik, bei der vor der Entnahme des Abformlöffels aus dem Mund das Befestigungselement gelöst wird, so dass der Einbringpfosten in der Abformmasse verbleiben kann, können Ungenauigkeiten nämlich dann entstehen, wenn mehrere zueinander schiefe Implantate im Kiefer des Patienten verankert sind und daher die Einschub- bzw. Ausziehrichtungen paarweise windschief sind. Beim Entfernen der Abformmasse wird diese dann zwangsläufig so lange gedehnt bzw. verformt, bis sich alle Einbringpfosten von den Implantaten gelöst haben. Ein Einbringpfosten zur Verwendung in der offenen Löffeltechnik sollte sich also in einem derartigen Szenario lösen lassen, ohne zu starken Verformungen der Abformmasse zu führen. Dies darf natürlich nicht auf Kosten seiner Funktionalität gehen. Weiterhin sollte der Einbringpfosten einen möglichst einfachen, insbesondere einstückigen, Aufbau aufweisen, so dass bei seiner Entnahme nicht komplizierte Handlungen vorzunehmen sind durch die gegebenenfalls Dehnungen der Abdruckmasse verursacht werden können.

Wie nunmehr erkannt wurde, lassen sich diese Anforderungen an einen Einbringpfosten erfüllen, indem sich das Endstück des Einbringpfostens, also des Stückes, das beim Einsetzen zuerst in das Implantat eingeführt wird, unter Aufrechterhaltung der Form bzw. Außenkontur des Einbringstückes verjüngt. Als Außenkontur wird hierbei die sich bei einem Schnitt durch das Einbringstück in einer Ebene senkrecht zur Längsrichtung des Implantats ergebende zweidimensionale Form verstanden. Aufgrund dieser Verjüngung entsteht beim Herausziehen des Einbringpfostens aus dem Implantat, während das obere Ende des Einbringpfostens in der Abdruckmasse eingebettet ist, möglichst schnell ein seitlicher Spielraum, wodurch das Abziehen erleichtert wird. Zudem zentriert sich beim Einsetzen des Einbringpfostens in das Implantat vor der Abdruckname aufgrund seiner Ausgestaltung das Endstück selbstständig und führt den Einbringpfosten in eine Position mit einem definierten Index. Die Erfindung umfasst hierbei sämtliche in den Patentansprüchen definierte Ausführungen, bei denen zur Einstellung bzw. Festlegung einer definierten Indizierung eine rotationsgesicherte Verbindung zwischen Implantat und Abutment bzw. Implantat und Einbringpfosten vorgesehen ist und bei denen sich unter im Wesentlichen Beibehaltung der Kontur dieses Verbindungsbereiches ein sich verjüngendes Endstück anschließt, so dass die Fläche dieser Kontur mit stärker werdender Verjüngung abnimmt.

In einer bevorzugten Ausführungsform, bei der die Schnittstelle als innenseitiger Mehrkant bzw. Vielkant, insbesondere als Vierkant oder Sechskant, mit einer Mehrzahl von Kanten ausgeführt ist, ist ein prismatisch und formkongruent zur Schnittstelle ausgeführtes Einbringstück vorgesehen, wobei sich das Endstück prismatisch mit nach innen geneigten Prismaflächen verjüngt und die Anzahl der Prismaflächen des sich verjüngenden Endstückes der Anzahl der Kanten des Vielkants entspricht.

Die ebenen Flächen zwischen den Prismakanten ähneln dadurch gewissermaßen Trapezen. Eine derartige Ausgestaltung des Endstückes wirkt sich besonders vorteilhaft aus bei der Entfernung des Abformlöffels bei mehreren zueinander schief stehenden Implantaten. Wenn beim Lösen des Befestigungselementes der Einbringpfosten aus dem Implantat gezogen wird und das Einbringstück den Öffnungsbereich des Implantats verlassen hat, lässt sich der Einbringpfosten relativ zum Implantat jeweils in Richtung einer der Kanten des Öffnungsbereiches deutlich wegkippen, ohne dass damit die Indizierung verloren geht.

Je weiter das Endstück aus dem Implantat herausgezogen wird, umso mehr kann der Einbringpfosten angewinkelt werden. Bei einer Mehrzahl von angulierten Implantaten kann so erreicht werden, dass so gut wie möglich eine gemeinsame Richtung realisiert werden kann, in der der Abformlöffel abgezogen werden kann, ohne dass große Kräfte auf die Einbringpfosten und die Abformmasse wirken. Somit lässt sich ein besonders genauer Abdruck erzeugen. Während des Abziehens bleibt also die Orientierung bzw. Indizierung erhalten, so dass in dieser Hinsicht keine Ungenauigkeiten entstehen. Die Abwinkelung des Einbringpfostens gegenüber dem Implantat beim Herausziehen kann dabei in den sechs verschiedenen, den Kanten des Öffnungsbereichs des Implantats zugeordneten Richtungen erfolgen, was genügend Möglichkeiten bietet, zueinander angulierte Einbringpfosten aus den Implantaten zu ziehen, ohne die Abformmasse merklich zu verformen. Die Begriffe Prisma bzw. prismatisch werden im Rahmen der Anmeldung im geometrischen Sinne verwendet für einen Körper mit einer vieleckigen Grundfläche, die parallel verschoben wird. Eine prismatische Verjüngung kennzeichnet hier ein derartiges Prisma, dessen Umfang um die Ecken in einer Ebene parallel zu seiner Grundfläche in einer Richtung senkrecht zur Grundfläche gesehen abnimmt.

Der Winkel zwischen der der Längsrichtung des Implantates und der jeweiligen Prismafläche liegt vorteilhafterweise im Bereich 7,5° bis 20°, vorzugsweise bei 15°. Bei Winkeln mit diesen Werten ist einerseits gewährleistet, dass eine recht schnelle Abwinkelung des Einbringpfostens möglich ist. Andererseits verengt sich der Querschnitt des Endstückes nicht so stark, dass relativ schnell ein Verlust der rotationsgesicherten Verbindung mit dem Implantat eintritt.

In einer weiteren bevorzugten Ausführungsform, bei der die Schnittstelle als Innenvielrund, insbesondere als Innensechsrund bzw. Torx, ausgestaltet ist, ist das Einbringstück als Außenvielrund formkongruent zum Innenvielrund ausgebildet, wobei das Endstück als sich verjüngender Außenvielrund ausgebildet ist.

Die Ausdehnung des Einbringstückes in Längsrichtung des Implantates gesehen ist vorzugsweise deutlich geringer, bevorzugt mehr als zweifach so klein, als die Ausdehnung des Endstückes. Mit anderen Worten, die Länge des Endstückes ist vorteilhafterweise mehr als doppelt so lang als die Länge des Einbringstückes, jeweils in Längsrichtung des Implantats gesehen. Dies hat folgenden vorteilhaften Effekt: beim Herausziehen des Einbringpfostens aus dem Implantat ist nur während der kurzen Strecke, während der sich das Einbringstück zumindest noch teilweise in dem Öffnungsbereich des Implantats befindet, ein Anwinkeln des Einbringpfostens im Verhältnis zum Implantat nicht möglich. Für ein deutlich längeres Stück kann dann - bei weiter gegebener Rotationssicherung - der Einbringpfosten angewinkelt werden.

Die Ausdehnung des Endstückes in Längsrichtung des Implantats beträgt vorteilhafterweise zwischen 0,5 mm bis 1,5 mm, bevorzugt 0,8 mm. Dies ist dann besonders vorteilhaft, wenn der Winkel in den oben genannten Bereichen liegt.

Um nach möglichst kurzer Herausziehdistanz schon ein Anwinkeln des Einbringpostens zu ermöglichen, beträgt die Ausdehnung des Einbringstückes in Längsrichtung des Implantats vorteilhafterweise zwischen 0,2 mm bis 1,0 mm, bevorzugt 0,4 mm.

In einer bevorzugten Ausführungsform ist die Ausdehnung des Einbringstückes und/oder die Ausdehnung des Endstückes in Längsrichtung des Implantats deutlich geringer ist als die Länge des Implantates und/oder die Länge des Einbringpfostens. Mit anderen Worten, die längliche Dimensionierung von Einbringstück und Endstück ist gerade groß genug gewählt, um die gewünschte Funktionalität während der Entnahme des Abformlöffels zu ermöglichen.

In Bezug auf den Abformpfosten wird die oben genannte Aufgabe erfindungsgemäß gelöst mit einem oben dargestellten Einbringpfosten einem Befestigungselement zur Befestigung des Einbringpfostens am Implantat. Vorteilhafterweise ist das Befestigungselement als Schraube ausgebildet.

Die Vorteile der Erfindung liegen insbesondere darin, dass durch ein sich verjüngendes Endstück auch bei einer Mehrzahl zueinander windschiefliegender Implantate Dehnungen und Verformungen der Abformmasse weitestgehend vermieden werden können, so dass eine äußerst präzise Abdrucknahme ermöglicht wird. Auch beim Einsetzvorgang, bei welchem vor dem Vorgang der Abdrucknahme der Einbringpfosten in das Implantat eingeführt wird, ergeben sich durch die Ausgestaltung des Endstückes Vorteile. Der Einbringpfosten muss nämlich aufgrund der sich verjüngenden Ausgestaltung des Endstückes nicht genau von oben bzw. parallel zum Implantat eingeführt werden. Auch beim Einsetzen des Einbringpfostens in das Implantat gewinnt der Zahnarzt somit deutlich mehr Sicherheit und Komfort, da sich das Einbringstück durch die besondere Form quasi selbstständig in den innenliegenden Öffnungsbereich des Implantates zentriert und automatisch in der Endposition einen sicheren Index aufweist.

Eine prismatisch ausgeführte Verjüngung erzeugt einerseits einen großen Spielraum für die Anwinkelung des Einbringpfostens gegenüber dem Implantat. Andererseits kann gleichzeitig die Indizierung beim Herausziehen des Einbringpfostens aus dem Implantat aufrechterhalten werden.

Ein Abformpfosten mit einem derartigen Einbringpfosten ermöglicht eine präzise Durchführung des Abformvorganges.

Ein Ausführungsbeispiel der Erfindung wird anhand einer Zeichnung näher erläutert. Darin zeigen in stark schematisierter Darstellung:
- FIG. 1: ein Zahnimplantat mit einem ersten darin eingesetzten Einbringpfosten nach dem Stand der Technik in einem seitlichen Querschnitt,
- FIG. 2: ein Zahnimplantat mit einem zweiten darin eingesetzten Einbringpfosten nach dem Stand der Technik in einem seitlichen Querschnitt,
- FIG. 3: ein Zahnimplantat mit einem eingesetzten Einbringpfosten in einer bevorzugten Ausführungsform in einem seitlichen Querschnitt, und
- FIG. 4: den Einbringpfosten gemäß FIG. 3 in einer Sicht von unten.

Gleiche Teile sind in allen Figuren mit denselben Bezugszeichen versehen.

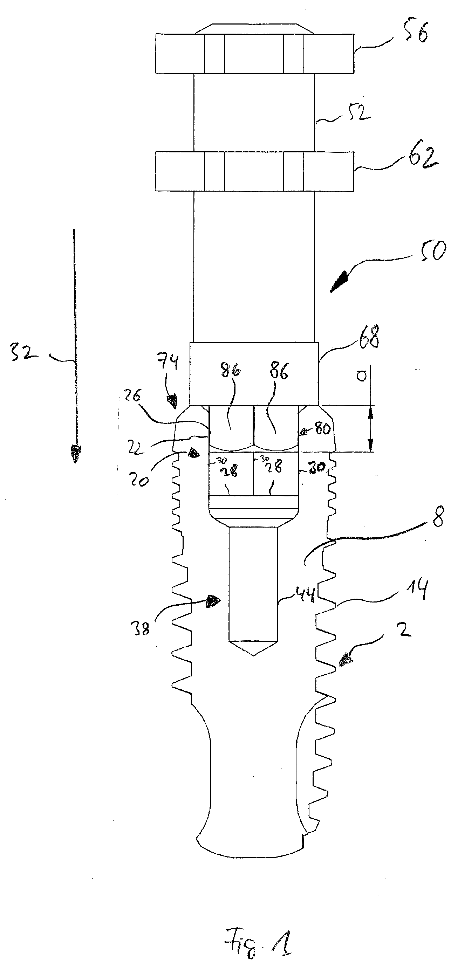

Ein in FIG. 1 dargestelltes Implantat SICmax 2, welches aus dem Stand der Technik bekannt ist, weist einen Implantatskörper 8 mit einem Außengewinde 14 zum Einschrauben in den Kiefer eines Patienten auf. An seinem der Mundhöhle zugewandten Ende des Implantats 2 ist ein mehrkantiger Öffnungsbereich 20 mit einer Schnittstelle 22 vorgesehen, welche einen Innensechskant 26 mit sechs Kanten 28, welche ein Sechseck bilden, und sechs Längskanten 30 aufweist. In Längsrichtung 32 des Implantates gesehen schließt sich an den Öffnungsbereich 20 ein im Wesentlichen zylindrisch ausgestalteter Innenbereich 38 mit einem Innengewinde 44 an. In das Innengewinde 44 kann ein Befestigungselement, insbesondere eine Schraube, hineingedreht werden, um mit dem Implantat 2 ein Abutment zu verschrauben.

Ein aus dem Stand der Technik bekannter Einbringpfosten 50 mit einem Pfostenkörper 52 ist in das Implantat 2 eingesetzt. Der Einbringpfosten 50 dient zur Übertragung der Position und Orientierung des Implantats 2 bei einer Abdrucknahme des Kiefers im Rahmen der offenen Löffeltechnik, bei der der jeweilige Einbringpfosten beim Entfernen des Abformlöffels aus dem Mund des Patienten in der Abformmasse verbleibt. Der Einbringpfosten 50 wird vor der Abdrucknahme mit Hilfe einer Schraube, die in das Innengewinde 44 eingeschraubt wird, mit dem Implantat 2 verbunden. Er weist am Pfostenkörper 52 einen oberen 56 und einen unteren Kragen 62 auf. Die Kragen 56 und 62 dienen als Retentionselemente zur Vermeidung von Horizontal-, Vertikal und Rotationsverschiebungen während des Entfernens des Abformlöffels aus dem Mund. Der Pfostenkörper 52 weist weiterhin ein Aufsatzstück 68 auf, welches im verschraubten Zustand auf einem Rand 74 des Implantatkörpers 8 aufliegt.

Zur Herstellung einer rotationsgesicherten Verbindung mit dem Implantat 2 weist der Einschraubpfosten ein Einbringstück 80 auf, welches eine prismatische Form aufweist und als Außensechskant mit sechs Sechskantflächen 86 ausgeführt ist. Eine Länge a des Einbringstückes 80 beträgt 1,2 mm. Das Einbringstück 80 dehnt sich entlang der Längsrichtung 32 also nur bis etwa zur Hälfte in den Öffnungsbereich 20 aus.

Bei einer Abdrucknahme von mehreren, zueinander windschief stehenden Implantaten 2 können beim Entfernen der Abdruckmasse darin Verformungen und Spannungen dadurch entstehen, dass die Einbringpfosten 50 solange entgegengesetzt zur Längsrichtung 32 herausgezogen werden müssen, bis das jeweilige Einbringstück 80 den Öffnungsbereich 20 verlassen hat. Beträgt die Länge a des Einbringstückes 80 wie im vorliegenden Fall 1,2 mm, müssen die Einbringpfosten 50 also auch genau über diese Distanz von 1,2 mm hinausgezogen werden. Aufgrund der daraus resultierenden Dehnungen der Abformmasse können Ungenauigkeiten in den Übertragungen der Implantatpositionen und Implantatsorientierungen auftreten. Dies wiederum kann dazu führen, dass der mit Hilfe des Modells modellierte Zahnersatz nicht oder nur schlecht an die gewünschte Stelle passt. Korrekturen davon sind - sofern überhaupt noch möglich - schwierig und kostspielig.

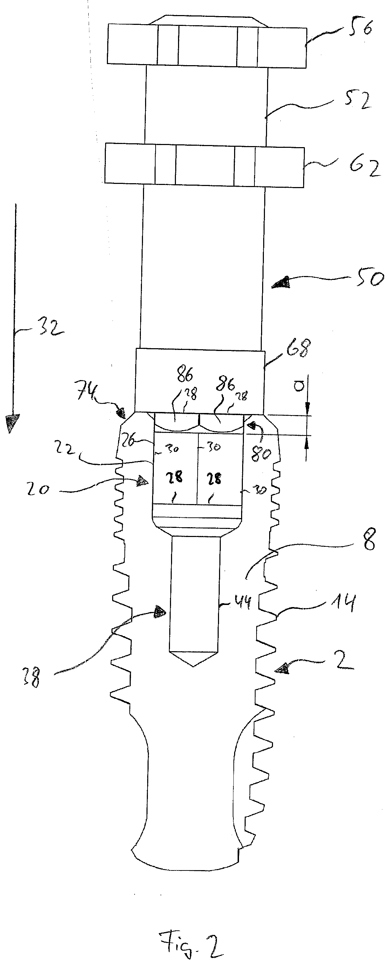

Ein aus dem Stand der Technik bekannter Einbringpfosten 50 der Anmelderin, bei dem die bei einer Abdrucknahme auftretenden Probleme teilweise vermindert werden können, ist in FIG. 2 dargestellt. Der Einbringpfosten gemäß FIG. 2 unterscheidet sich von dem aus FIG. 1 dadurch, dass die Länge a des Einbringstückes 80 deutlich reduziert wurde und nun nur noch 0,4 mm beträgt. Dadurch entsteht beim Herausziehen des Einbringpfostens 50 aus dem Implantat 2 viel früher räumlicher Spielraum, so dass die Dehnungen der Abduckmasse reduziert werden können. Nachteilig bei dieser Ausführung ist allerdings, dass auch sehr früh die Orientierung bzw. Indizierung und damit die entsprechende Führung verloren geht. Auch beim Einführen des Einbringpfostens 50 in das Implantat ist wenig Führung vorhanden, was den entsprechenden Vorgang verkompliziert und für den Zahnarzt unkomfortabel macht. Weiterhin besteht ein Nachteil dieser Ausführung darin, dass Gewebereste (Mundschleimhaut oder Knochenkanten) die Einführung des kurzen Einbringstücks in die Orientierung bzw. Indizierung verhindern können.

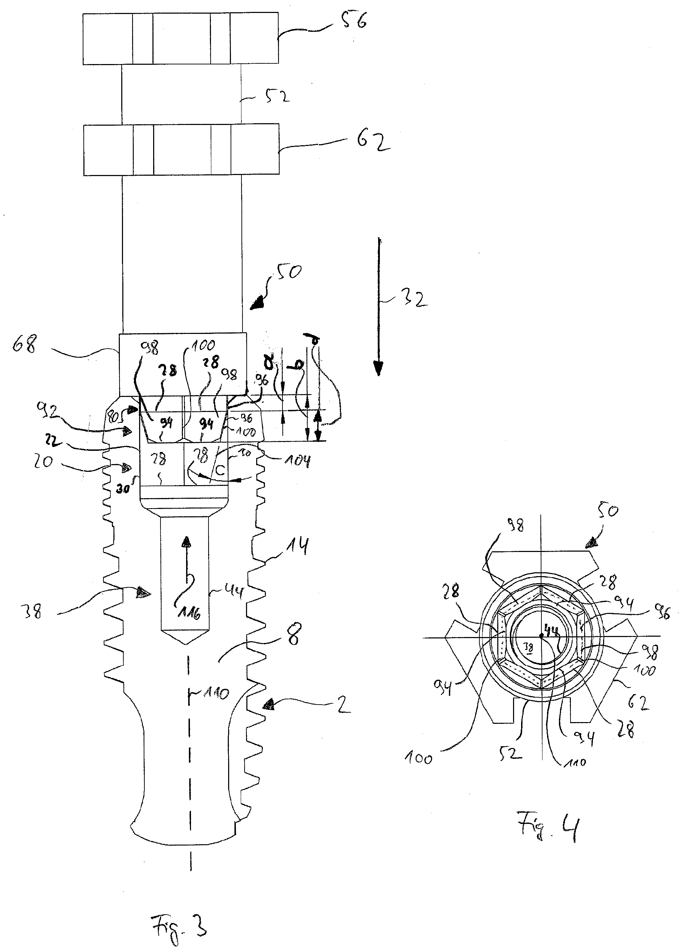

Eine erfindungsgemäße Verbesserung der beschriebenen Einbringpfosten 50 ist in FIG. 3 in einer bevorzugten Ausführungsform dargestellt. Das Einbringstück 80 ist, wie bei dem in der FIG. 2 dargestellten Einbringpfosten 50, 0,4 mm lang, d. h., seine Länge a beträgt wieder 0,4 mm. An das Einbringstück 80 mit einer Außenkontur 96 schließt sich jetzt allerdings in Längsrichtung 32 bzw. apikaler Richtung des Implantats ein Endstück 92 an, dessen Außenkontur 96 sich in Längsrichtung 92 stetig verjüngt. Das Endstück 92 ist als sich in seiner Außenkontur 96 verjüngendes Prisma ausgeführt in der Art eines in der Zahl seiner Ecken verallgemeinerten Pyramidenstumpfes. Mit anderen Worten, statt 4 Ecken und Kanten weist das Endstück 6 Ecken und Kanten auf. Das Endstück 92 weist sechs Prismaflächen 98 auf, die an einer Seite jeweils durch die Kanten 28 und an einer gegenüberliegenden Seite durch Innenkanten 94 begrenzt werden. Das Endstück 92, welches gewissermaßen einen zur Einführung in den Öffnungsbereich 20 des Implantats vorgesehenen Verjüngungszapfen darstellt, schließt sich nahtlos an das Einbringstück 80 an.

Durch diese Konstruktion des Einbringpfostens 50 werden die oben genannten Schwierigkeiten beim Abziehen der Abdruckmasse bei einer Mehrzahl schief zueinander stehender Implantate 2 stark vermindert. Aufgrund des sich prismatisch verjüngenden Endstückes 92 kann durch entsprechendes Anwinkeln des jeweiligen Einbringpostens 50 im Verhältnis zum Implantat 2 erreicht werden, dass möglichst gut eine gemeinsame bzw. übereinstimmende Richtung realisiert werden kann, in der die Einbringpfosten 50 aus den jeweils zugeordneten Implantaten 2 gezogen werden. Mit anderen Worten, die Einbringpfosten 50 werden möglichst parallel zueinander orientiert. Gleichzeitig bleibt eine rotationsgesicherte, formschlüssige Verbindung zwischen Einbringpfosten 50 und Öffnungsbereich 20 des Implantats 2 bestehen, so dass verhindert wird, dass beim Abkippen des jeweiligen Einbringpfostens 50 dieser sich leicht dreht und auf diese Weise die Abdruckmasse dehnt bzw. verformt, wodurch Ungenauigkeiten bei der Abdrucknahme entstehen können.

Eine Länge b, welche die Länge a, also die Ausdehnung des Einbringstückes 80 in Längsrichtung 32 des Implantates, und die Ausdehnung des Endstückes 92 umfasst, ist im vorliegenden Fall 1,3 mm lang, woraus sich eine Länge d für das Endstück 92 von 0,8 mm ergibt. Das Endstück 92 ist also mehr als doppelt so lang wie das Einbringstück 80. Dadurch lässt sich über die Länge d eine rotationsgesicherte Verbindung aufrechterhalten, während sich der Einbringpfosten 50 im Verhältnis zur Längsrichtung 32 wegkippen lässt. Eine starre rotationsgesicherte Verbindung besteht nur solange, wie sich das Einbringstück 80 innerhalb des Öffnungsbereichs 20 befindet.

Ein Winkel c zwischen der Längsrichtung 32 und einer Richtung 104, welche der Neigung der jeweiligen Prismafläche 98 nach innen zu einer Mittelachse 110 des Implantats bezeichnet, beträgt im vorliegenden Ausführungsbeispiel 15°. Dadurch wird erreicht, dass fast über die gesamte Länge des Endstückes 92 die Rotationssicherheit gegeben ist.

In FIG. 4 ist der Einbringpfostens 50 aus einer in FIG. 3 gezeigten Richtung 116 dargestellt. Die Prismaflächen 98 werden jeweils durch die Kanten 28, die Innenkannten 94 und zwischen den Prismaflächen 98 liegenden Zwischenkanten 100 begrenzt. Die Prismaflächen 98 reichen jeweils über ihre Innenkannten94 nur soweit radial in Richtung 110 hinein, dass der Innenbereich 38 noch für die Schraube bzw. das Befestigungselement zugänglich ist. Zwischen den Kanten 28 und den Innenkannten 94 verjüngt sich das Endstück 92 unter Beibehaltung seiner Außenkontur 96.

**Bezugszeichenliste**

| | | | |
|---|---|---|---|
| 2 | Implantat | a | Länge |
| 8 | Implantatskörper | b | Länge |
| 14 | Außengewinde | c | Winkel |
| 20 | Öffnungsbereich | d | Länge |
| 22 | Schnittstelle | | |
| 26 | Innensechskant | | |
| 28 | Kante | | |
| 30 | Längskante | | |
| 32 | Längsrichtung | | |
| 38 | Innenbereich | | |
| 44 | Innengewinde | | |
| 50 | Einbringpfosten | | |
| 52 | Pfosten körper | | |
| 56 | oberer Kragen | | |
| 62 | unterer Kragen | | |
| 68 | Aufsatzstück | | |
| 74 | Rand | | |
| 80 | Einbringstück | | |
| 86 | Sechskantfläche | | |
| 92 | Endstück | | |
| 94 | Innenkante | | |
| 96 | Außenkontur | | |
| 98 | Prismafläche | | |
| 100 | Zwischenkante | | |
| 104 | Richtung | | |
| 110 | Mittelachse | | |
| 116 | Richtung | | |

## Patentansprüche

1. Einbringpfosten (50) zur Übertragung der Lage und Orientierung wenigstens eines im Kiefer eines Patienten eingebrachten Implantates (2), welches aufweist einen innenseitigen Öffnungsbereich (20) mit einer Schnittstelle (22), auf ein Modell, der Einbringpfosten (50) umfassend ein zum Einsetzen in das Implantat (2) und zur Bildung einer rotationsgesicherten Verbindung mit der Schnittstelle (22) vorgesehenes Einbringstück (80) mit einer konstanten Außenkontur (96), wobei sich an das Einbringstück (80) in apikaler Richtung ein Endstück (92) anschließt, **dadurch gekennzeichnet, dass** das Endstück (92) als zur Einführung in den Öffnungsbereich (20) des Implantats vorgesehener Verjüngungszapfen ausgebildet ist, der sich im Wesentlichen unter Beibehaltung der Außenkontur (96) stetig verjüngt.

2. Einbringpfosten (50) nach Anspruch 1, wobei die Schnittstelle (22) als innenseitiger Vielkant mit einer Mehrzahl von Kanten (28) ausgebildet ist, und wobei sich das Endstück (80) prismatisch mit nach innen geneigten Prismaflächen (98) verjüngt und die Anzahl der Prismaflächen (98) des sich verjüngenden Endstückes (80) der Anzahl der Kanten (28) des Vielkants entspricht.

3. Einbringpfosten (50) nach Anspruch 1, wobei das Einbringstück (80) als Außenvielrund ausgebildet ist, und wobei das Endstück (80) als sich verjüngender Außenvielrund ausgebildet ist.

4. Einbringpfosten (50) nach einem der Ansprüche 1 bis 3, wobei die Länge des Endstückes (92) mehr als doppelt so lang wie die Länge des Einbringstückes (80) ist.

5. Abformpfosten mit einem Einbringpfosten (50) nach einem der Ansprüche 1 bis 4 und einem Befestigungselement zur Befestigung des Einbringpfostens (50) am Implantat (2).

6. Abformpfosten nach Anspruch 5, wobei das Befestigungselement als Schraube ausgebildet ist.

## Claims

1. Insertion rod (50) for transferring onto a model the location and orientation of at least one implant (2) which is introduced in the jaw of a patient and comprises an internal opening region (20) having an interface (22), said insertion rod (50) comprising an insert piece (80) which has a constant outer contour (96) and is provided for insertion into the implant (2) and for forming a rotation-proof connection with the interface (22), an end piece (92) adjoining the insert piece (80) in the apical direction, **characterised in that** the end piece (92) is designed as a tapering pin which is provided for insertion into the opening region (20) of the implant and which tapers continuously while substantially maintaining the outer contour (96).

2. Insertion rod (50) according to claim 1, wherein the interface (22) is designed as an inner polygon having a plurality of edges (28), and wherein the end piece (80) tapers in the manner of a prism by means of inwardly inclined prism faces (98) and the number of the prism faces (98) of the tapering end piece (80) corresponds to the number of the edges (28) of the polygon.

3. Insertion rod (50) according to claim 1, wherein the insertion piece (80) is designed as a polygonal socket having rounded outer faces, and wherein the end piece (80) is designed as a tapering polygonal socket having rounded outer faces.

4. Insertion rod (50) according to any of claims 1 to 3, wherein the length of the end piece (92) is more than double the length of the insertion piece (80).

5. Transfer comprising an insertion rod (50) according to any of claims 1 to 4 and a fastening element for fastening the insertion rod (50) to the implant (2).

6. Transfer according to claim 5, wherein the fastening element is designed as a screw.

## Revendications

1. Tige d'insertion (50) destinée à transmettre à un modèle la position et l'orientation d'au moins un implant (2), qui est inséré dans la mâchoire d'un patient et qui comporte une zone d'ouverture (20) intérieure munie d'une interface (22), la tige d'insertion (50) comportant une pièce d'insertion (80) présentant un contour extérieur (96) constant et destinée à être insérée dans l'implant (2) et à former une liaison anti-rotation avec l'interface (22), une pièce d'extrémité (92) se raccordant à la pièce d'insertion (80) dans une direction apicale, **caractérisée en ce que** la pièce d'extrémité (92) est conformée en cheville à rétrécissement qui est destiné à être introduite dans la zone d'ouverture (20) de l'implant et qui se rétrécit continûment tout en conservant sensiblement le contour extérieur (96).

2. Tige d'insertion (50) selon la revendication 1, dans laquelle l'interface (22) a une forme intérieure polyédrique pourvue d'une pluralité de faces (28) et dans laquelle la pièce d'extrémité (80) se rétrécit de manière d'un prisme dont les faces (98) sont inclinées vers l'intérieur et le nombre de faces (98) de la partie d'extrémité (80) qui se rétrécit correspond au nombre de bords (28) de la forme polyédrique.

3. Tige d'insertion (50) selon la revendication 1, dans laquelle la pièce d'insertion (80) a une forme extérieure polylobulaire et dans laquelle la pièce d'extrémité (80) a une forme extérieure polylobulaire qui se rétrécit.

4. Colonne d'insertion (50) selon l'une des revendications 1 à 3, dans laquelle la longueur de la pièce d'extrémité (92) est supérieure à deux fois la longueur de la pièce d'insertion (80).

5. Transfert muni d'une tige d'insertion (50) selon l'une des revendications 1 à 4 et d'un élément de fixation destiné à fixer la tige d'insertion (50) à l'implant (2).

6. Transfert selon la revendication 5, dans lequel l'élément de fixation a la forme d'une vis.
